# EUROPÄISCHE PATENTANMELDUNG

(11) **EP 3 023 453 A1**
(43) Veröffentlichungstag der Anmeldung: **25.05.2016**
(21) Anmeldenummer: 15195665.3
(22) Anmeldetag: 20.11.2015
(51) Int. Cl.: C08J 7/12, C08K 5/00, C09J 7/02, B44C 1/00, B44C 3/00, B44C 1/10

(54) **FOLIE ZUR DEKORATION UND/ODER ZUM SCHUTZ VON OBERFLÄCHEN VON GEGENSTÄNDEN**

(30) Priorität: 20.11.2014 DE 202014105598 U
(71) Anmelder: Alu Custom Design GmbH, 22159 Hamburg (DE)
(72) Erfinder: Karstädt, Dennis, 22848 Noederstedt (DE); Budelski, Georg, 21073 Hamburg (DE)
(74) Vertreter: RGTH

(57) **Zusammenfassung**

Um eine Folie zur Dekoration und/oder zum Schutz von Oberflächen von Gegenständen, wobei die Folie eine äußerste Schicht umfasst, und wobei die äußerste Schicht der Folie mindestens einen ersten Oberflächenbereich und mindestens einen zweiten Oberflächenbereich aufweist, bereitzustellen, so dass deren Belastbarkeit sowie deren Anfälligkeit für Verschmutzungen oder Schäden und die Verformbarkeit einer Folie verbessert wird, wird vorgeschlagen, dass der mindestens eine erste Oberflächenbereich der äußersten Schicht derart mit Laserbestrahlung bearbeitet ist, dass der mindestens eine erste Oberflächenbereich optisch verändert ist und so der mindestens eine erste Oberflächenbereich und der mindestens eine zweite Oberflächenbereich der äußersten Schicht unterschiedliche Farben aufweisen.

## Beschreibung

### Technisches Gebiet

Die Erfindung betrifft eine Folie zur Dekoration und/oder zum Schutz von Oberflächen von Gegenständen.

### Stand der Technik

Die aus dem Stand der Technik bekannten Folien zur Dekoration und/oder zum Schutz von Oberflächen von Gegenständen sind zum einen einschichtig sowie einfarbig ausgebildet und können somit nur einen einfarbigen Gesamteindruck verleihen. Die Möglichkeit Farben auf die einschichtige und einfarbig ausgebildete Folie aufzutragen, wird in der Praxis oft verworfen, da sich diese aufgetragenen Farben schnell abnutzen und zu keinem zufriedenstellenden Gesamtergebnis führen.

Alternativ gibt es im Stand der Technik Folien zur Dekoration und/oder zum Schutz von Oberflächen von Gegenständen, bei denen unterschiedlich farbige Schichten übereinanderliegend in der Folie zusammengefasst sind, wobei zur Herstellung einer Mehrfarbigkeit die oberste Schicht abgetragen wird. Dies ist bspw. aus der DE 41 34 271 C1 bekannt. Hier werden mehrere Farblackschichten in einem Transferverfahren auf eine Oberfläche aufgebracht, wobei die obere Farbschicht mittels Laserstrahlung bereichsweise wieder gänzlich entfernt wird, sodass die darunter liegende Farblackschicht in diesen Bereichen hervortreten kann.

Derartige Verfahren sind jedoch sehr aufwendig. So muss die oberste Schicht an den abzutragenden Stellen gänzlich entfernt werden, jedoch ohne die darunter liegende Schicht zu beeinträchtigen. Dies setzte eine genau festgelegte Dicke der oberen Schicht voraus. Selbst dann kann die darunterliegende Schicht bspw. durch thermische Effekte in ihrem Aussehen oder ihrer Beschaffenheit unvorteilhafterweise verändert werden.

Ferner weist die Folie nach der bereichsweisen Abtragung der obersten Schicht in diesen Bereichen eine unterschiedliche Dicke auf, sodass die Folie insgesamt rau bzw. uneben ist. Dies führt zu einer geringeren Belastbarkeit der Folie, da Schichten der Folie nicht mehr durchgängig ausgebildet sind. So kann die Folie nicht mehr beliebig verformt werden, da sich die Bereiche der Folie, in denen eine Schicht abgetragen wurde bzw. eine Schicht nicht mehr durchgängig ausgebildet ist, anders verformen als Bereiche, in denen keine Schicht abgetragen wurde bzw. sämtliche Schichten der Folie durchgängig verlaufen. Diese Eigenschaft ist jedoch gerade für Folien zur Dekoration und/oder zum Schutz von Oberflächen von Gegenständen essentiell, da die zu dekorierenden und/oder zu schützenden Gegenstände in den seltensten Fällen plan ausgebildet sind. Im Gegenteil weisen die zu dekorierenden und/oder zu schützenden Gegenstände die unterschiedlichsten dreidimensionalen Formen auf. Um eine breite, individuelle Einsetzbarkeit der Folie zu gewähren muss diese demnach unbedingt verformbar und dehnbar sein.

Ferner setzen sich durch Unebenheiten der Folie aus dem Stand der Technik sehr schnell Schmutzpartikel fest, die gerade aufgrund der rauen Beschaffenheit der Folie schlechter entfernt werden können, sodass vor allem dessen Optik leidet. Zudem ist es allgemein bekannt, dass Oberflächen mit Unebenheiten insgesamt weniger robust sind, da diese angreifbarer sind bspw. durch Feuchtigkeit oder Staubpartikel. Dies ist auch bei den aus dem Stand der Technik bekannten Folien der Fall.

### Darstellung der Erfindung: Aufgabe, Lösung, Vorteile

Der vorliegenden Erfindung liegt die Aufgabe zugrunde eine Folie zur Dekoration und/oder zum Schutz von Oberflächen von Gegenständen derart zu verbessern, dass deren Belastbarkeit sowie deren Anfälligkeit für Verschmutzungen oder Schäden verbessert wird. Ferner ist es Aufgabe der Erfindung die Verformbarkeit einer Folie zu verbessern.

Die oben genannten Aufgaben werden durch eine Folie mit den Merkmalen nach Anspruch 1 gelöst.

Gemäß der vorliegenden Erfindung umfasst die Folie zur Dekoration und/oder zum Schutz von Oberflächen von Gegenständen eine äußerste Schicht, wobei die äußerste Schicht der Folie mindestens einen ersten Oberflächenbereich und mindestens einen zweiten Oberflächenbereich aufweist. Bevorzugterweise ist die äußerste Schicht bei Aufbringung der Folie auf dem zu dekorierenden und/oder schützenden Gegenstand von diesem abgewandt. Insbesondere besteht die äußerste Schicht aus nur einer Lage der Folie, das bedeutet, dass die äußerste Schicht ein einheitliches Material aufweist und bevorzugterweise durch nicht in unterschiedliche Unterschichten bzw. -lagen unterteilt werden kann.

Erfindungsgemäß ist der mindestens eine erste Oberflächenbereich der äußersten Schicht mit Laserbestrahlung bearbeitet, und zwar derart, dass der mindestens eine erste Oberflächenbereich optisch verändert ist und so der mindestens eine erste Oberflächenbereich und der mindestens eine zweite Oberflächenbereich der äußersten Schicht unterschiedliche Farben aufweisen.

Bevorzugterweise ist der erste Oberflächenbereich mit Laserstrahlung bestrahlt, insbesondere derart, dass der erste Oberflächenbereich optisch verändert ist, insbesondere gegenüber dem zweiten Oberflächenbereich. Bevorzugterweise ist der zweite Oberflächenbereich nicht mit Laserstrahlung bearbeitet.

Insbesondere drückt sich die optische Veränderung des ersten Oberflächenbereichs durch eine Änderung des Absorptionsverhalten und/oder Reflexionsverhaltens des ersten Oberflächenbereichs der äußersten Schicht aus. Bevorzugterweise sind die von dem ersten Oberflächenbereich absorbierten Wellenlängen und/oder reflektierten Wellenlängen gegenüber den von dem zweiten Oberflächenbereich absorbierten Wellenlängen und/oder reflektierten Wellenlängen verschieden. In anderen Worten weist der erste Oberflächenbereich und der zweite Oberflächenbereich ein unterschiedliches Absorptionsspektrum und/oder Reflexionsspektrum, insbesondere bei Bestrahlung mit weißem Licht, auf. Aufgrund des unterschiedlichen Absorptionsspektrums und/oder Reflexionsspektrum, insbesondere bei Bestrahlung mit weißem Licht, weist der erste Oberflächenbereich und der zweite Oberflächenbereich unterschiedliche Farben auf.

Durch die Laserbestrahlung ist keine farblich unterschiedliche Schicht unterhalb der äußersten Schicht optisch freigelegt. Dabei bedeutet der Begriff "optisch freigelegt", dass durch eine Laserablation einer äußeren Schicht eine andersfarbige darunterliegende Schicht optisch hervortreten kann, sodass die darunterliegende Schicht in diesen Bereichen gesehen werden kann. Laserablation bedeutet ein gezielter, makroskopischer Abtrag einer Schicht, sodass die darunterliegende Schicht optisch freigelegt ist. Ferner ist durch die Laserbestrahlung keine andersfarbige Schicht auf die äußerste Schicht aufgetragen.

Die optische Veränderung des ersten Oberflächenbereiches findet bevorzugterweise durch thermische Erwärmung mittels Laserstrahlung statt. Die thermische Erwärmung entsteht durch Aufheizen des ersten Oberflächenbereichs durch Absorption der applizierten Laserstrahlung. Grundsätzlich werden durch Laserstrahlung bewirkte thermische Effekte je nach applizierter Leistungsdichte in Erhitzen, Koagulieren, Karbonisieren und Verdampfen unterschieden. Insbesondere ist der erste Oberflächenbereich nicht karbonisiert und/oder verdampft. Durch die thermische Erwärmung sind die physikalischen und chemischen Eigenschaften des ersten Oberflächenbereichs irreversibel verändert. Insbesondere lassen in dem ersten Oberflächenbereich Wärmeeinflusszonen feststellen, die auf die Veränderung der chemischen und physikalischen Eigenschaften deuten.

Ferner bevorzugt weist die Folie eine innere Schicht auf, wobei die innere Schicht als Klebeschicht ausgebildet ist. Diese Klebeschicht dient zur Anbringung an den zu dekorierenden und/oder schützenden Gegenstand. Bei Anbringung an den Gegenstand ist die innere Schicht dem Gegenstand zugewandt.

Insbesondere sind sämtliche Schichten der Folie durchgängig ausgebildet. Bevorzugterweise erstrecken sich die Schichten somit durchgängig über die gesamte Länge und Breite der Folie. Die Folie weist insbesondere nur zwei Schichten auf. Besonders bevorzugt weist die Folie keine zwei unterschiedlich farbigen Schichten auf. Bevorzugterweise besteht die Folie ausschließlich aus der äußersten Schicht und der Klebeschicht. So ist die äußerste Schicht insbesondere anliegend an der inneren Schicht ausgebildet. In einer Querschnittdarstellung der Folie schließt sich die äußerste Schicht bevorzugterweise direkt an die Klebeschicht an. Durch die optische Veränderung des ersten Oberflächenbereichs mittels Laserstrahlung durch thermische Erwärmung anstatt durch Ablation des ersten Oberflächenbereichs ist keine Vorsehung einer Folie mit mehreren, unterschiedlich farbigen Schichten notwendig.

Ferner bevorzugt weist der mindestens eine erste Oberflächenbereich mindestens eine erste Farbe, bevorzugterweise genau eine erste Farbe, auf, wobei der mindestens eine zweite Oberflächenbereich mindestens eine zweite Farbe, bevorzugterweise genau eine zweite Farbe, aufweist. Die verschiedenen Farben kennzeichnen sich bevorzugterweise durch unterschiedliche Absorptions- und/oder Reflexionsspektren des ersten Oberflächenbereichs, insbesondere bei Bestrahlung mit weißem Licht, im Vergleich zum zweiten Oberflächenbereich. Insbesondere ist der erste Oberflächenbereich nicht karbonisiert, sodass bevorzugterweise die mindestens eine Farbe des mindestens einen ersten Oberflächenbereichs nicht schwarz und/oder nicht dunkelbraun ist.

Insbesondere weist die äußerste Schicht mehrere erste Oberflächenbereiche und mehrere zweite Oberflächenbereiche auf, wobei die mehreren ersten Oberflächenbereiche und die mehreren zweiten Oberflächenbereiche bevorzugterweise jeweils nicht zusammenhängend ausgebildet sind. Die ersten Oberflächenbereiche und die zweiten Oberflächenbereiche bilden bevorzugterweise jeweils keine zusammenhängende Fläche. So sind die ersten und die zweiten Oberflächenbereiche insbesondere jeweils nicht miteinander verbunden ausgebildet. Ebenso können die Oberflächenbereiche keine klare Grenzlinie aufweisen und miteinander verschwimmen. Dies ist insbesondere dann der Fall, wenn sich die Farben des ersten Oberflächenbereichs und des zweiten Oberflächenbereichs nicht gravierend voneinander unterscheiden. Insgesamt suggerieren die ineinander verfließenden ersten und zweiten Oberflächenbereiche, und somit der unterschiedlichen Farbbereiche, einen 3-D Effekt der gesamten Folie, der sich besonders für Folien zur Dekoration und/oder Schutz von Oberflächen von Gegenständen eignet. Insbesondere bilden die mehreren ersten Oberflächenbereiche eine graphische Darstellung, besonders bevorzugt Buchstaben oder Zahlen, die durch den suggerierten 3D-Effekt besonders zur Geltung kommt. Jedoch kann es auch besonders bevorzugt sein, dass die mehreren ersten Oberflächenbereiche keine Buchstaben oder Zahlen bilden.

Besonders bevorzugt weist der mindestens eine erste Oberflächenbereich der äußersten Schicht der Folie eine Oberfläche auf, wobei die Oberfläche mindestens 20 Prozent, bevorzugterweise mindestens 30 Prozent, ferner bevorzugterweise mindestens 50 Prozent der gesamten Oberfläche der äußersten Schicht beträgt. Insbesondere sind die jeweiligen restlichen Prozent der gesamten Oberfläche durch den zweiten Oberflächenbereich umfasst, sodass die Oberfläche der äußersten Schicht aus dem mindestens einen ersten und dem mindestens einen zweiten Oberflächenbereich besteht.

Bevorzugterweise weisen der mindestens eine erste Oberflächenbereich und der mindestens eine zweite Oberflächenbereich der äußersten Schicht jeweils eine Dicke auf, wobei die Dicke des mindestens einen ersten Oberflächenbereichs mindestens 50 Prozent, ferner bevorzugt mindestens 70 Prozent, insbesondere bevorzugt mindestens 85 Prozent der Dicke des mindestens einen zweiten Oberflächenbereichs der äußersten Schicht der Folie beträgt. Ein derartiges Verhältnis der Dicken wird dadurch garantiert, dass durch die thermische Erwärmung des ersten Oberflächenbereichs mittels der Laserstrahlung im Wesentlichen keine Ablation der ersten Oberflächenbereichs erfolgt.

Insbesondere weist die Folie insgesamt eine im Wesentlichen gleichbleibende Dicke auf. Die im Wesentlichen gleiche Dicke führt dazu, dass die Folie insgesamt eben ausgebildet ist. Dadurch ist die Folie nicht anfällig für Schmutz und ist leicht zu reinigen. Ferner ist die Folie sehr robust, da sich durch die Durchgängigkeit der Schichten keine Angriffsflächen für bspw. Regenwasser, Schmutz, Staubpartikel bieten. Zudem ist die Folie auf eine leichte, beliebige und vorhersehbare Art verformbar, da die Folie in allen Bereichen im Wesentlichen das gleiche Elastizitätsverhalten aufweist. Diese Eigenschaft ist insbesondere für Folien zur Dekoration und/oder zum Schutz von Oberflächen von Gegenständen wesentlich, da die zu dekorierenden und/oder zu schützenden Gegenstände die unterschiedlichsten Krümmungen aufweisen können. Somit ist die Folie für unterschiedlichste Formen von Gegenständen einsetzbar.

Ferner bevorzugt ist die Folie derart ausgebildet, mindestens 20 Prozent, bevorzugterweise mindestens 30 Prozent, ferner bevorzugt mindestens 40 Prozent, der gesamten Oberfläche des zu schützenden und/oder zu dekorierenden Gegenstandes abzudecken. Dadurch kann die Folie den zu schützenden und/oder zu dekorieren Gegenstand möglichst großflächig abdecken, sodass deren Dekorationswirkung und/oder Schutzwirkung besonders vorteilhaft ist.

Insbesondere weist der zu dekorierende und/oder zu schützende Gegenstand zwei betragsmäßig größte Flächen seiner Gesamtoberfläche auf, wobei die Folie dazu geeignet ist zumindest eine der betragsmäßig größten Flächen des Gegenstandes zu mindestens 60 Prozent, ferner bevorzugt zu mindestens 70 Prozent, insbesondere bevorzugt zu mindestens 80 Prozent, zu bedecken.

Bevorzugterweise ist die Folie undurchsichtig ausgebildet. Ferner bevorzugt weist die Folie einen thermoplastischen Kunststoff auf. Bei dem thermoplastischen Kunststoff handelt es sich insbesondere um Polyvinylchlorid. Bevorzugterweise besteht die Folie, ausgenommen einer Klebefläche, aus Polyvinylchlorid.

Ein weiterer Aspekt der Erfindung ist die Verwendung einer erfindungsgemäßen Folie zur Dekoration und/oder zum Schutz von Oberflächen von Gegenständen, insbesondere mobilen Geräten zur Kommunikation und/oder Datenverarbeitung und/oder Fahrzeugen, insbesondere Automobilen. Dabei wird unter einem mobilen Datengerät zur Kommunikation und/oder Datenverarbeitung insbesondere ein Handy, ein Tablet oder ein Laptop verstanden. Ferner findet die erfindungsgemäße Folie bevorzugterweise Verwendung in der Autofolierung. Dafür ist die Folie insbesondere durch ihre gute Verformbarkeit geeignet.

Ferner bevorzugt wird die Folie dazu verwendet mindestens 20 Prozent, bevorzugterweise mindestens 30 Prozent, ferner bevorzugt mindestens 40 Prozent, der gesamten Oberfläche des zu schützenden und/oder zu dekorierenden Gegenstandes abzudecken. Dadurch kann die Folie den zu schützenden und/oder zu dekorieren Gegenstand möglichst großflächig abdecken, sodass deren Dekorationswirkung und/oder Schutzwirkung besonders vorteilhaft ist.

Insbesondere weist der zu dekorierende und/oder zu schützende Gegenstand zwei betragsmäßig größte Flächen seiner Gesamtoberfläche auf, wobei die Folie dazu verwendet wird zumindest eine der betragsmäßig größten Flächen des Gegenstandes zu mindestens 60 Prozent, ferner bevorzugt zu mindestens 70 Prozent, insbesondere bevorzugt zu mindestens 80 Prozent, zu bedecken.

Ein weiterer Aspekt der Erfindung betrifft eine Folie zur Dekoration und/oder zum Schutz von Oberflächen von Gegenständen, wobei die Folie eine äußerste Schicht umfassend mindestens einen ersten Oberflächenbereich und mindestens einen zweiten Oberflächenbereich aufweist, dadurch gekennzeichnet, dass die Folie durch folgenden Schritt hergestellt wird:
- Bestrahlung des mindestens einen ersten Oberflächenbereichs der äußersten Schicht mittels einer Laserbestrahlung derart, dass der mindestens eine erste Oberflächenbereich optisch verändert ist und so der mindestens eine erste Oberflächenbereich und der mindestens eine zweite Oberflächenbereich der äußersten Schicht unterschiedliche Farben aufweisen, wobei zur Laserbestrahlung bevorzugterweise ein CO2 Laser verwendet wird, wobei bei der Laserbestrahlung bevorzugterweise eine Frequenz von 10 bis 5000 Hz, ferner bevorzugt von 1000 bis 4000 Hz, besonders bevorzugt von 2000 bis 3000 Hz, verwendet wird, und wobei bei der Laserbestrahlung bevorzugterweise eine Leistung von 0,5 bis 5 Watt, ferner bevorzugt von 1 bis 3,5 Watt, besonders bevorzugt von 1,25 bis 2,0 Watt, verwendet wird.

Ein anderer Aspekt der Erfindung bezieht sich auf ein Verfahren zur Herstellung einer Folie zur Dekoration und/oder zum Schutz von Oberflächen von Gegenständen, wobei die Folie eine äußerste Schicht umfassend mindestens einen ersten Oberflächenbereich und mindestens einen zweiten Oberflächenbereich aufweist, dadurch gekennzeichnet, dass das Verfahren folgenden Schritt umfasst:
- Bestrahlung des mindestens einen ersten Oberflächenbereichs der äußersten Schicht mittels einer Laserbestrahlung derart, dass der mindestens eine erste Oberflächenbereich optisch verändert ist und so der mindestens eine erste Oberflächenbereich und der mindestens eine zweite Oberflächenbereich der äußersten Schicht unterschiedliche Farben aufweisen.

Bevorzugterweise wird der erste Oberflächenbereich mit Laserstrahlung bestrahlt, insbesondere derart, dass der erste Oberflächenbereich optisch verändert wird, insbesondere gegenüber dem zweiten Oberflächenbereich. Bevorzugterweise wird der zweite Oberflächenbereich nicht mit Laserstrahlung bearbeitet. Durch die Laserstrahlung lassen sich individuelle Graphiken oder Bilder schaffen, die auf durch die unterschiedliche Farbgebung auf der äußersten Schicht sichtbar sind.

Insbesondere drückt sich die optische Veränderung des ersten Oberflächenbereichs durch eine Änderung des Absorptionsverhalten und/oder Reflexionsverhaltens des ersten Oberflächenbereichs der äußersten Schicht aus. Bevorzugterweise sind die von dem ersten Oberflächenbereich absorbierten Wellenlängen und/oder reflektierten Wellenlängen gegenüber den von dem zweiten Oberflächenbereich absorbierten Wellenlängen und/oder reflektierten Wellenlängen verschieden. In anderen Worten weist der erste Oberflächenbereich und der zweite Oberflächenbereich ein unterschiedliches Absorptionsspektrum und/oder Reflexionsspektrum, insbesondere bei Bestrahlung mit weißem Licht, auf. Aufgrund des unterschiedlichen Absorptionsspektrums und/oder Reflexionsspektrum, insbesondere bei Bestrahlung mit weißem Licht, weist der erste Oberflächenbereich und der zweite Oberflächenbereich unterschiedliche Farben auf.

Durch die Laserbestrahlung wird keine farblich unterschiedliche Schicht unterhalb der äußersten Schicht optisch freigelegt. Dabei bedeutet der Begriff "optisch freigelegt", dass durch eine Laserablation einer äußeren Schicht eine andersfarbige darunterliegende Schicht optisch hervortreten kann, sodass die darunterliegende Schicht in diesen Bereichen gesehen werden kann. Laserablation bedeutet ein gezielter, makroskopischer Abtrag einer Schicht, sodass die darunterliegende Schicht optisch freigelegt ist. Ferner wird durch die Laserbestrahlung keine andersfarbige Schicht auf die äußerste Schicht aufgetragen.

Die optische Veränderung des ersten Oberflächenbereiches findet bevorzugterweise durch thermische Erwärmung mittels Laserstrahlung statt. Die thermische Erwärmung entsteht durch Aufheizen des ersten Oberflächenbereichs durch Absorption der applizierten Laserstrahlung. Grundsätzlich werden durch Laserstrahlung bewirkte thermische Effekte je nach applizierter Leistungsdichte in Erhitzen, Koagulieren, Karbonisieren und Verdampfen unterschieden. Insbesondere ist der erste Oberflächenbereich nicht karbonisiert und/oder verdampft. Durch die thermische Erwärmung werden die physikalischen und chemischen Eigenschaften des ersten Oberflächenbereichs irreversibel verändert. Insbesondere lassen in dem ersten Oberflächenbereich Wärmeeinflusszonen feststellen, die auf die Veränderung der chemischen und physikalischen Eigenschaften deuten.

Ferner bevorzugt werden zur Herstellung der Folie nur eine innere Schicht und die äußerste Schicht vorgesehen, sodass die Folie aus der inneren Schicht und der äußersten Schicht besteht. Dabei wird die innere Schicht insbesondere als Klebeschicht ausgebildet. Diese Klebeschicht dient zur Anbringung an den zu dekorierenden und/oder schützenden Gegenstand. Bei Anbringung an den Gegenstand ist die innere Schicht dem Gegenstand zugewandt.

Insbesondere werden sämtliche Schichten der Folie durchgängig ausgebildet. Bevorzugterweise erstrecken sich die Schichten somit durchgängig über die gesamte Länge und Breite der Folie.

Bevorzugterweise wird zur Laserbestrahlung ein CO2 Laser verwendet. Ferner bevorzugt findet bei der Laserbestrahlung eine Frequenz von 10 bis 5000 Hz, ferner bevorzugt von 1000 bis 4000 Hz, besonders bevorzugt von 2000 bis 3000 Hz, Verwendung, insbesondere bevorzugt wird bei der Laserbestrahlung eine Leistung von 0,5 bis 5 Watt, ferner bevorzugt von 1 bis 3,5 Watt, besonders bevorzugt von 1,25 bis 2,0 Watt, verwendet.

### Kurze Beschreibung der Zeichnungen

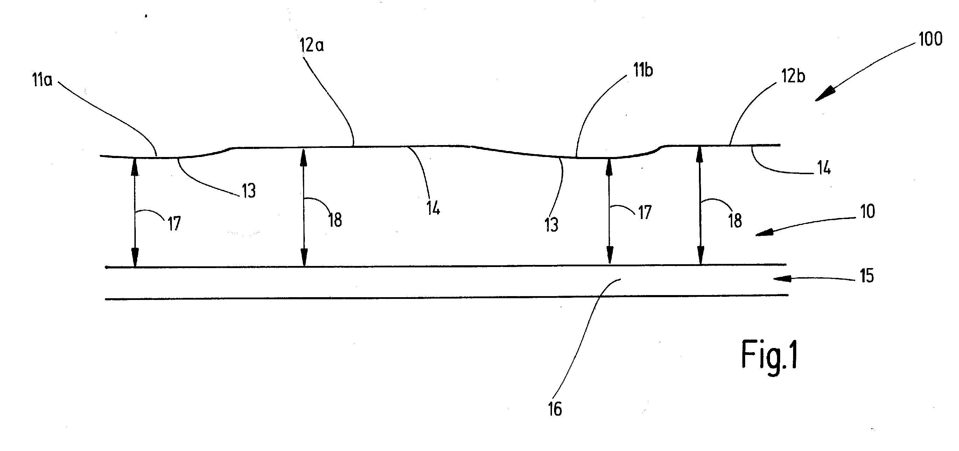

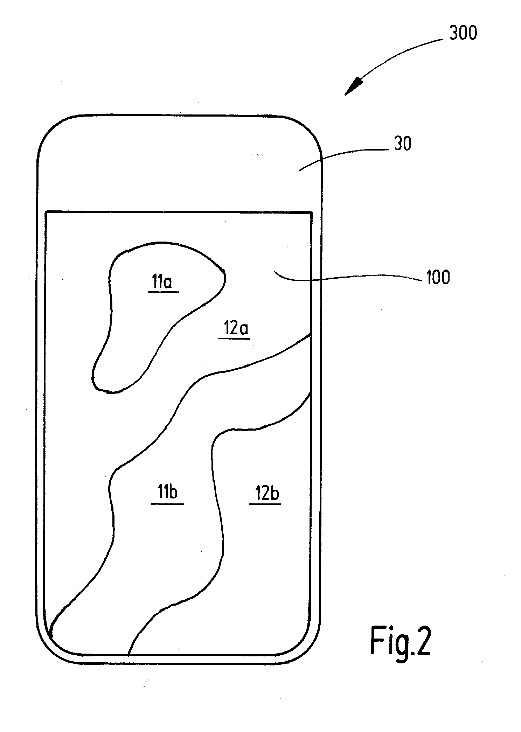

Es wird nachstehend ein Ausführungsbeispiel der vorliegenden Erfindung anhand der Figuren 1 und 2 näher erläutert. Es zeigen in rein schematischer Darstellung:
Figur 1: eine senkrechte Schnittdarstellung einer erfindungsgemäßen Folie,
   und
Figur 2: einen Draufsicht auf die erfindungsgemäße Folie nach Figur 1 bei Verwendung zur Dekoration und zum Schutz einer Oberfläche eines Gegenstandes.

### Bevorzugte Ausführungsformen der Erfindung

Figur 1 zeigt eine senkrechte Schnittdarstellung einer erfindungsgemäßen Folie (100) zur Dekoration und/oder zum Schutz von Oberflächen (30) von Gegenständen (300). Die Folie (100) weist eine äußerste Schicht (10) auf. Die äußerste Schicht wiederum umfasst zwei erste Oberflächenbereiche (11a, 11b) und zwei zweite Oberflächenbereiche (12a, 12b). Dabei sind die zwei ersten Oberflächenbereiche (11a, 11b) der äußersten Schicht (10) derart mit Laserbestrahlung bearbeitet, dass die beiden ersten Oberflächenbereiche (11a, 11b) optisch verändert sind. Und zwar weisen die beiden ersten Oberflächenbereiche (11a, 11b) und die zwei zweiten Oberflächenbereiche (12a, 12b) der äußersten Schicht (10) unterschiedliche Farben auf.

Ferner weist die Folie (100) eine innere Schicht (15) auf, die als Klebeschicht (16) ausgebildet ist. Die Folie (100) besteht ausschließlich aus der äußersten Schicht (10) und der als Klebeschicht (16) ausgebildeten inneren Schicht (15). Somit schließt sich im gezeigten Querschnitt direkt an die äußerste Schicht die als Klebeschicht (16) ausgebildete innere Schicht (15) an. Die äußerste Schicht der Folie besteht aus Polyvinylchlorid.

Die ersten Oberflächenbereiche (11a, 11b) weisen eine erste Farbe (13) auf, während die beiden zweiten Oberflächenbereiche (12a, 12b) eine zweite Farbe (14) aufweisen. Dabei unterscheiden sich die zwei Farben (13, 14) durch ein verändertes Absorptions- und/oder Reflexionsverhalten.

Die beiden ersten Oberflächenbereiche (11a, 11b) weisen die gleiche Dicke (17) auf, die sich von der Dicke (18) der zweiten Oberflächenbereiche (12a, 12b) unterscheidet. Dabei unterscheiden sich die Dicken (17, 18) nur unwesentlich. Die Dicke (17) der ersten Oberflächenbereiche (11a, 11b) beträgt 90 Prozent der Dicke (18) der beiden zweiten Oberflächenbereiche (12a, 12b).

In Figur 2 ist eine Draufsicht auf die erfindungsgemäße Folie nach Figur 1 bei Verwendung zur Dekoration und zum Schutz einer Oberfläche eines Gegenstandes gezeigt. Die Folie (100) ist auf der Oberfläche (30) des Gegenstandes (200) aufgeklebt. Somit ist die innere Schicht (15) der Folie der Oberfläche (30) des Gegenstandes (300) zugewandt, während die äußerste Schicht (10) der Folie (100) der Oberfläche (30) des Gegenstandes (300) abgewandt ist. Die beiden ersten Oberflächenbereiche (11a, 11b) und die beiden zweiten Oberflächenbereiche (12a, 12b) der äußersten Schicht (10) der Folie (100) sind jeweils nicht miteinander verbunden und somit zusammenhängend ausgebildet.

Bei dem Gegenstand (300) handelt es sich um ein Handy. Dieses ist im Wesentlichen quaderförmig ausgebildet und weist zwei sich gegenüberliegende, betragsmäßig größte Flächen seiner Gesamtoberfläche auf. Die Folie ist dazu ausgebildet 80 Prozent der in der Figur 2 in Draufsicht gezeigten betragsmäßig größten Fläche (30) abzudecken.

### Bezugszeichenliste

- 100: Folie
- 10: äußerste Schicht
- 11a, 11b: erster Oberflächenbereich
- 12a, 12b: zweiter Oberflächenbereich
- 13: erste Farbe
- 14: zweite Farbe
- 15: innere Schicht
- 16: Klebeschicht
- 17: Dicke des ersten Oberflächenbereichs
- 18: Dicke des zweiten Oberflächenbereichs

- 300: zu dekorierender und/oder schützender Gegenstand
- 30: Oberfläche des Gegenstandes

## Patentansprüche

1. Folie (100) zur Dekoration und/oder zum Schutz von Oberflächen (30) von Gegenständen (300),
wobei die Folie (100) eine äußerste Schicht (10) umfasst, und
wobei die äußerste Schicht (10) der Folie (100) mindestens einen ersten Oberflächenbereich (11a, 11b) und mindestens einen zweiten Oberflächenbereich (12a, 12b) aufweist,
**dadurch gekennzeichnet, dass** der mindestens eine erste Oberflächenbereich (11a, 11b) der äußersten Schicht (10) derart mit Laserbestrahlung bearbeitet ist, dass der mindestens eine erste Oberflächenbereich (11a, 11b) optisch verändert ist und so der mindestens eine erste Oberflächenbereich (11a, 11b) und der mindestens eine zweite Oberflächenbereich (12a, 12b) der äußersten Schicht (10) unterschiedliche Farben aufweisen.

2. Folie nach Anspruch 1, **dadurch gekennzeichnet, dass** die Folie (100) eine innere Schicht (15) aufweist, wobei die innere Schicht (15) als Klebeschicht (16) ausgebildet ist.

3. Folie nach Anspruch 2, **dadurch gekennzeichnet, dass** die Folie (100) aus der äußersten Schicht (10) und der Klebeschicht (16) besteht.

4. Folie nach einem der vorherigen Ansprüche, **dadurch gekennzeichnet, dass** der mindestens eine erste Oberflächenbereich (11a, 11b) mindestens eine erste Farbe (13), bevorzugterweise genau eine erste Farbe (13), aufweist,
wobei der mindestens eine zweite Oberflächenbereich (12a, 12b) mindestens eine zweite Farbe (14), bevorzugterweise genau eine zweite Farbe (14), aufweist.

5. Folie nach einem der vorherigen Ansprüche, **dadurch gekennzeichnet, dass** die äußerste Schicht (10) mehrere erste Oberflächenbereiche (11a, 11b) und mehrere zweite Oberflächenbereiche (12a, 12b) aufweist,
wobei die mehreren ersten Oberflächenbereiche (11a, 11b) und die mehreren zweiten Oberflächenbereiche (12a, 12b) bevorzugterweise jeweils nicht zusammenhängend ausgebildet sind.

6. Folie nach einem der vorherigen Ansprüche, **dadurch gekennzeichnet, dass** der mindestens eine erste Oberflächenbereich (11a, 11b) der äußersten Schicht (10) der Folie (100) eine Oberfläche aufweist,
wobei die Oberfläche mindestens 20 Prozent, bevorzugterweise mindestens 30 Prozent, ferner bevorzugterweise mindestens 50 Prozent der gesamten Oberfläche der äußersten Schicht (10) beträgt.

7. Folie nach einem der vorherigen Ansprüche, **dadurch gekennzeichnet, dass** der mindestens eine erste Oberflächenbereich (11a, 11b) und der mindestens eine zweite Oberflächenbereich (12a, 12b) der äußersten Schicht (10) jeweils eine Dicke (17, 18) aufweisen,
wobei die Dicke (17) des mindestens einen ersten Oberflächenbereichs (11a, 11b) mindestens 50 Prozent, ferner bevorzugt mindestens 70 Prozent, insbesondere bevorzugt mindestens 85 Prozent der Dicke (18) des mindestens einen zweiten Oberflächenbereichs (12a, 12b) der äußersten Schicht (10) der Folie (100) beträgt.

8. Folie nach einem der vorherigen Ansprüche, **dadurch gekennzeichnet, dass** die Folie (100) derart ausgebildet ist, mindestens 20 Prozent, bevorzugterweise mindestens 30 Prozent, ferner bevorzugt mindestens 40 Prozent, der gesamten Oberfläche des zu schützenden und/oder zu dekorierenden Gegenstandes (300) abzudecken.

9. Folie nach einem der vorherigen Ansprüche, **dadurch gekennzeichnet, dass** die Folie (100) undurchsichtig ausgebildet ist.

10. Folie nach einem der vorherigen Ansprüche, **dadurch gekennzeichnet, dass** die Folie (100) einen thermoplastischen Kunststoff aufweist.

11. Verwendung einer Folie (100) nach einem der Ansprüche 1 bis 10 zur Dekoration und/oder zum Schutz von Oberflächen (30) von Gegenständen (300), insbesondere mobilen Geräten zur Kommunikation und/oder Datenverarbeitung und/oder Fahrzeugen, insbesondere Automobilen.

12. Folie (100) zur Dekoration und/oder zum Schutz von Oberflächen (30) von Gegenständen (300), wobei die Folie (100) eine äußerste Schicht (10) umfassend mindestens einen ersten Oberflächenbereich (11a, 11b) und mindestens einen zweiten Oberflächenbereich (12a, 12b) aufweist, **dadurch gekennzeichnet, dass** die Folie (100) durch folgenden Schritt hergestellt wird:
• Bestrahlung des mindestens einen ersten Oberflächenbereichs (11a, 11b) der äußersten Schicht (10) mittels einer Laserbestrahlung derart, dass der mindestens eine erste Oberflächenbereich (11a, 11b) optisch verändert ist und so der mindestens eine erste Oberflächenbereich (11a, 11b) und der mindestens eine zweite Oberflächenbereich (12a, 12b) der äußersten Schicht (10) unterschiedliche Farben aufweisen,
wobei zur Laserbestrahlung bevorzugterweise ein CO2 Laser verwendet wird,
wobei bei der Laserbestrahlung bevorzugterweise eine Frequenz von 10 bis 5000 Hz, ferner bevorzugt von 1000 bis 4000 Hz, besonders bevorzugt von 2000 bis 3000 Hz verwendet wird, und
wobei bei der Laserbestrahlung bevorzugterweise eine Leistung von 0,5 bis 5 Watt, ferner bevorzugt von 1 bis 3,5 Watt, besonders bevorzugt von 1,25 bis 2,0 Watt, verwendet wird.

13. Verfahren zur Herstellung einer Folie (100) zur Dekoration und/oder zum Schutz von Oberflächen (30) von Gegenständen (300), wobei die Folie (100) eine äußerste Schicht (10) umfassend mindestens einen ersten Oberflächenbereich (11a, 11b) und mindestens einen zweiten Oberflächenbereich (12a, 12b) aufweist, **dadurch gekennzeichnet, dass** das Verfahren folgenden Schritt umfasst:
• Bestrahlung des mindestens einen ersten Oberflächenbereichs (11a, 11b) der äußersten Schicht (10) mittels einer Laserbestrahlung derart, dass der mindestens eine erste Oberflächenbereich (11a, 11b) optisch verändert ist und so der mindestens eine erste Oberflächenbereich (11a, 11b) und der mindestens eine zweite Oberflächenbereich (12a, 12b) der äußersten Schicht (10) unterschiedliche Farben aufweisen.

14. Verfahren nach Anspruch 13, **dadurch gekennzeichnet, dass** zur Laserbestrahlung ein CO2 Laser verwendet wird.

15. Verfahren nach Anspruch 13 oder 14, **dadurch gekennzeichnet, dass** bei der Laserbestrahlung eine Frequenz von 10 bis 5000 Hz, ferner bevorzugt von 1000 bis 4000 Hz, besonders bevorzugt von 2000 bis 3000 Hz, verwendet wird.

16. Verfahren nach Anspruch 13 bis 15, **dadurch gekennzeichnet, dass** bei der Laserbestrahlung eine Leistung von 0,5 bis 5 Watt, ferner bevorzugt von 1 bis 3,5 Watt, besonders bevorzugt von 1,25 bis 2,0 Watt, verwendet wird.
